(19) **Europäisches Patentamt European Patent Office Office européen des brevets**

(11) **EP 4 628 179 A1**

(12) **EUROPEAN PATENT APPLICATION**

(43) Date of publication:
08.10.2025 Bulletin 2025/41

(21) Application number: 24168140.2

(22) Date of filing: 02.04.2024

(51) International Patent Classification (IPC):
$B01D\ 3/00^{(2006.01)}$  $B01D\ 3/20^{(2006.01)}$
$F25J\ 3/04^{(2006.01)}$  $B01D\ 53/18^{(2006.01)}$

(52) Cooperative Patent Classification (CPC):
B01D 3/008; B01D 3/20; B01D 53/185;
F25J 3/04927

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Sulzer Management AG
8401 Winterthur (CH)

(72) Inventors:
• LINDER, Thomas
8400 Winterthur (CH)

• BACHMANN, Christian
8548 Ellikon an der Thur (CH)
• HACK, Mathias
8404 Winterthur (CH)
• SCHAEFFER, Pierre
8442 Hettlingen (CH)
• WEHRLI, Marc
8311 Brütten (CH)
• GÄBLER, Ansor
78467 Konstanz (DE)

(74) Representative: IPS Irsch AG
Langfeldstrasse 88
8500 Frauenfeld (CH)

(54) **HIGH PERFORMANCE LIQUID COLLECTOR AND GAS DISTRIBUTOR SYSTEM FOR A SEPARATION DEVICE**

(57) The present invention relates to a liquid collector and gas distributor system for a separation device, such as for a mass transfer column, in particular for a packing column for distillation or absorption, wherein the liquid collector and gas distributor system comprises at least two layers of liquid collection channels, wherein the at least two layers of liquid collection channels are arranged one above the other and each layer of liquid collection channels comprises at least three liquid collection channels being arranged adjacent to each other, but spaced apart thus forming a gap between each two adjacent liquid collection channels of a layer, wherein, seen in top view, at least 60% of the area of the liquid collector and gas distributor system is covered by the liquid collection channels, and wherein, seen in top view, the ratio of the portion of the area of a layer of liquid collection channels being covered by the liquid collection channels divided by the total area of the layer of liquid collection channels is different to the, seen in top view, ratio of the portion of the area of at least one other layer of liquid collection channels being covered by the liquid collection channels divided by the total area of the layer of liquid collection channels.

**EP 4 628 179 A1**

**Description**

The present invention relates to a liquid collector and gas distributor system for a separation device, such as for a mass transfer column, in particular for a packing column for distillation or absorption. Moreover, the present invention relates to a mass transfer column, in particular for distillation or absorption, which comprises such a liquid collector and gas distributor system as well as to a method for separating at least two fluids, preferably for performing a distillation or an absorption, which uses at least such a mass transfer column.

Separation devices, such as mass transfer columns, are employed for an intensive gas-liquid or liquid-liquid contact in a wide variety of processes, such as in particular distillation, absorption, stripping, scrubbing, extraction and the like. Distillation columns, for example, are designed to separate a specific substance from a liquid mixture comprising two or more substances by selective evaporation and condensation. For this purpose, distillation columns comprise a boiler at the bottom and a condenser at the top so that during the operation vapour rises upwardly and liquid descends so as to enable a gas-liquid contact for effecting the mass transfer between both phases. The substance with the higher boiling point will concentrate in the liquid phase, wherein the substance with the lower boiling point will concentrate in the gas phase. In order to achieve an intensive gas-liquid contact, such columns are typically filled with an internal to optimize the gas-liquid mass transfer. Examples for such an internal are packings, for instance random packings and structured packings. Typically, a column comprises a plurality of packing beds being arranged - spaced apart - on top of each other.

A structured packing bed typically comprises several layers being stacked vertically above each other, wherein each layer is composed of one or more structured packing elements. The higher the diameter of the structured packing bed, the higher the number of structured packing elements per layer. The structured packings elements serve for the improvement of the mass transfer and/or heat exchange between at least two fluid phases of different density. The structured packing elements comprise a plurality of different sheets, each of which providing surface area for the heavier phase that trickles down along the surface of the sheet and spreads. In addition, between the different sheets of the structured packing elements open spaces are provided, which are filled with the gas phase and provide a path for the gas to ascend, while it is driven by a pressure gradient. The pressure gradient is required to overcome the flow resistance. In the typical case of counter-current flow, the average flow direction of the gas is from bottom to top of the structured packing element and thus opposite to the average flow direction of the liquid phase. By allowing the liquid phase to spread on the surface of the structured packing elements, an interface is created between the liquid phase and the gas phase so that an efficient heat and mass transfer between both phases is established at the interface. As set out above, a mass transfer column usually comprises several beds of structured packing elements being arranged - spaced apart - on top of each other.

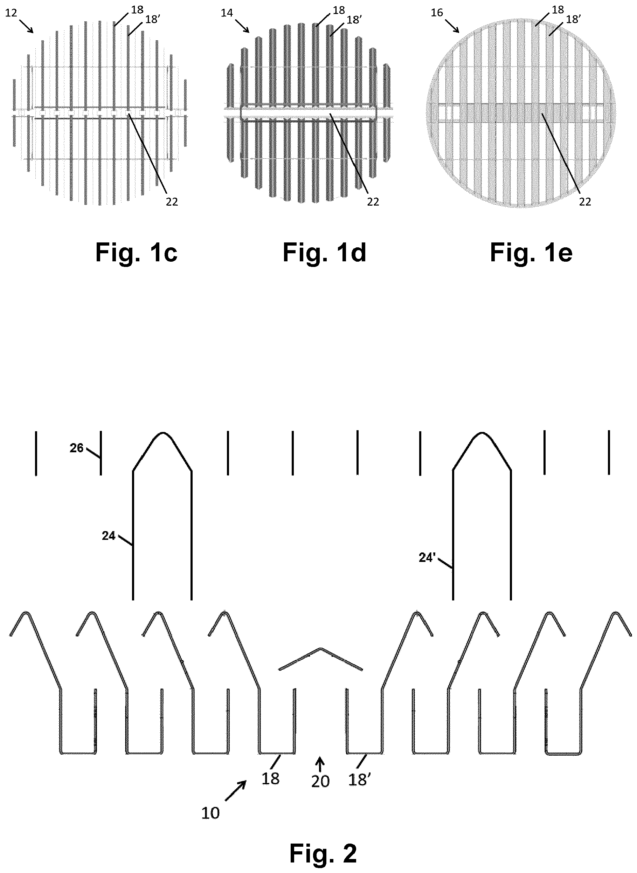

A mass transfer column usually comprises above the uppermost packing bed a liquid distributor being designed to homogenously distribute the liquid over the whole cross-section of the respective packing bed, before the liquid enters into it. Furthermore a mass transfer column usually comprises below the lowermost packing bed a liquid collector and gas distributor system being designed to collect most of the liquid exiting from the lowermost packing bed and to homogenously distribute the ascending gas over the whole cross-section of the mass transfer column, before it enters into the respective packing bed. Likewise, usually between adjacent packing beds liquid collector and gas distributor systems are provided, which are designated to collect the liquid exiting from the upper packing bed and to distribute it homogenously over the whole cross-section of the next lower packing bed, before the liquid enters into the next lower packing bed, and to homogenously distribute the ascending gas over the whole cross-section of the mass transfer column, before it enters into the respective upper packing bed. Such liquid distributors and gas collectors increase the separation efficiency of the mass transfer column as well as reduce the pressure loss during the operation of the mass transfer column. A typical liquid collector and gas distributor system comprises, seen from the top to the bottom of the liquid collector and gas distributor system, one layer of liquid collection channels being arranged adjacent to each other, which are open on the top and which have a rectangular or u-shaped cross-section. The channels of a typical prior art lamella collector, such as one shown in figure 2, comprise plates, which extend upwardly and are inclined with regard to the vertical direction so as to direct as much descending liquid into the liquid collection channels as possible. However, the inclined plates have the disadvantage of increasing the pressure drop and of deflecting the gas flow so that the gas flow deviates much from the desired uniform gas flow distribution into the packing bed arranged above the liquid collector and gas distributor system. In order to avoid such inclined plates, a liquid collector and gas distributor systems have been proposed, which comprise at least two horizontal layers of liquid collection channels, wherein the at least two horizontal layers of liquid collection channels are arranged one above the other and each horizontal layer of liquid collection channels comprises a plurality, which are arranged adjacent to each other, but spaced apart thus forming a gap between each two adjacent liquid collection channels of a horizontal layer. The liquid collection channels are usually hollow boxes or troughs, respectively, which are open on the top and which have a rectangular or u-shaped cross-section. Commonly, the liquid collection channels of both horizontal layers and thus also the gaps of both horizontal layers are arranged offset from one another so that most of the liquid exiting the lowermost packing bed and flowing down the mass transfer column is collected within the liquid collection channels, whereas ascending gas shall be distributed as homogeneously as possible over the cross-sectional area of the mass transfer column, before the gas enters into the lowermost packing bed of the mass transfer column. However, such conventional liquid collector and gas distributor systems do not achieve an optimal gas distribution over the whole cross-sectional area of the mass transfer column, but only a quite uneven gas distribution, which has a negative impact on the overall performance of the mass transfer column, such as that it leads to a limitation of the operating range, to a reduction in the separation performance and/or to an increase in the pressure loss.

In view of this it is an object of the present invention to provide a liquid collector and gas distributor system for a mass transfer column, which leads during its operation to an optimal distribution of ascending gas over the cross-sectional area of the mass transfer column as well as to a good collection of descending liquid so that during the operation of the mass transfer column a particular high separation efficiency and a low pressure loss are achieved without limiting the operating range.

This object is satisfied in accordance with the present invention by providing a liquid collector and gas distributor system for a separation device, such as for a mass transfer column, in particular for a packing column for distillation or absorption, wherein the liquid collector and gas distributor system comprises at least two layers of liquid collection channels, wherein the at least two layers of liquid collection channels are arranged one above the other and each layer of liquid collection channels comprises at least three liquid collection channels being arranged adjacent to each other, but spaced apart thus forming a gap between each two adjacent liquid collection channels of a layer, wherein, seen in top view, at least 60% of the area of the liquid collector and gas distributor system is covered by the liquid collection channels, and wherein, seen in top view, the ratio of the portion of the area of a (first) layer of liquid collection channels being covered by the liquid collection channels divided by the total area of the (first) layer of liquid collection channels is different to the, seen in top view, ratio of the portion of the area of at least one other (second) layer of liquid collection channels being covered by the liquid collection channels divided by the total area of the (second) layer of liquid collection channels.

By varying between at least two layers of liquid collection channels, which are preferably arranged at least essentially horizontal, the ratios of the portion of the area of a layer of liquid collection channels being covered by the liquid collection channels divided by the total area of the layer of liquid collection channels, in particular so that the respective ratio of each upper layer is lower than the respective ratio of a next lower layer of liquid collection channels, it is achieved that due to the resulting increased gas flow between these channels the liquid rain through the liquid collection channels is reduced as well as the ascending gas is subjected during its ascent to a differing and in particular to a reduced pressure loss leading to an equalization of the gas distribution over the whole cross-section of the mass transfer column and to a slowdown of the velocity of the ascending gas, before the homogenized gas flow enters from below into the lowermost packing bed. Thereby, a negative interference between the liquid descending from the lower end of the lowermost packing layer and the gas ascending into the lower end of the lowermost packing layer, such as an entrainment of liquid in the ascending gas flow, is minimized. All in all, the liquid collector and gas distributor system in accordance with the present invention leads during the operation of a mass transfer column to an improved overall performance and in particular - compared to a mass transfer column comprising the same packing beds and the same liquid distributor, but a conventional liquid collector and gas distributor system - to an increased separation efficiency, even at higher throughput, and also to a lower pressure loss over the packing bed(s). This allows to increase the throughput of the mass transfer column leading to a capacity expansion, i.e. to a shift of the separation performance-capacity limit to higher values, and/or leading to an increase of the separation performance at the same capacity allowing that the mass transfer column may be shorter and more narrow so that the operational costs as well as the capital expenditures are reduced.

In accordance with the present invention the liquid collector and gas distributor system comprises at least two layers of liquid collection channels. Preferably, at least one and more preferably each of the at least two layers of liquid collection channels is/are arranged at least essentially horizontal, wherein at least essentially horizontal means that the plurality of liquid collection channels of the essentially horizontal layer are arranged adjacent to, but spaced apart from each other, wherein for at least 50%, preferably for at least 80%, more preferably for at least 90%, still more preferably for at least 95% and most preferably for each of the liquid collection channels of one essentially horizontal layer a polygon connecting the center points inside a liquid collection channel, wherein the center points are positioned on a sequence of cross-sections through the liquid collection channel placed between one end and the opposite end of the liquid collection channel, has maximal deviation from a horizontal plane of at most 30°, preferably at most 20°, more preferably at most 10°, still more preferably at most 5°, yet more preferably than 2° and most preferably 0°. Herein, center point of a liquid collection channel means the center of gravity of each cross-section through a liquid collection channel, wherein sequence of cross-sections through the liquid collection channel placed between one end and the opposite end of the liquid collection channel mean that for the respective liquid collection channel cross-sections are determined, seen in the longitudinal direction of the liquid collection channel, every 50 mm and preferably every 10 mm from one end to the opposite end of the liquid collection channel. For any cross-section then a center point of gravity is determined and the center points of all adjacent cross-sections of the liquid collection channel are connected so as to obtain the polygon. Cross-section through a liquid collection channel means here a section made in a plane perpendicular to the longitudinal direction of the liquid collection channel. In case of a square, rectangular or circular cross-section, the center point is the midpoint of the square, rectangle or circle, respectively, whereas in the case of an asymmetric cross-section it is the balance point, which is obtained by assuming that a fictive cross section is uniformly made of the same material and has a constant density. Preferably, the polygon is at least substantially a straight line, wherein substantially a straight line means that the mean absolute error of the polygon from a straight regression line is at most below 30 mm, preferably below 20 mm, more preferably below 10 mm still more preferably below 5 mm yet more preferably below 2 mm and most preferably below 1mm. In other words, an at least essentially horizontal layer of liquid collection channels, which are usually hollow boxes or troughs, respectively, being open on the top so as to allow liquid to flow into it from above, means that a plurality of liquid collection channels is arranged adjacent to, but spaced apart from each other so that the polygon connecting the centers of gravity of the liquid collection channels is an at least substantially horizontal line, when the liquid collector and gas distributor system is arranged so that the open ends of the liquid collection channels are arranged on the top side of the liquid collection channels. The mean absolute error referred to above corresponds to the average absolute difference between the vertical distances of the polygonal line points and the regression line determined by the points defining the polygon. More specifically, the mean absolute error is determined by measuring the vertical distance for each of a number of polygonal line points and the corresponding points on the regression line, by summing all measured distances and by dividing the sum by the number of polygonal line points being considered. In other words: $MAE = (1 / n) * \Sigma |y\_i - f(x\_i)|$, wherein MAE is the mean absolute error, n is the total number of points in the polygonal line, $y\_i$ is the actual y-value of the i-th point on the polygonal line, $f(x\_i)$ is the predicted y-value for the i-th point based on the regression line equation (where $x\_i$ is the i-th point's x-value) and $\Sigma$ is the summation symbol. In other words, $|y\_i - f(x\_i)|$ represents the absolute value of the vertical portion of the distance of the i-th polygon point from the regression line. The aforementioned maximal deviation of a polygon from a horizontal plane is defined as the angle between the regression line determined by the points defining the polygon and the horizontal plane. Furthermore, it is required that a horizontal reference plane can be selected for the essentially horizontal layer, such that the polygon for at least 50%, preferably for at least 80%, more preferably for at least 90%, still more preferably for at least 95% and most preferably for each of the liquid collection channels of the essentially horizontal layer crosses that horizontal reference plane at least once or all points of such polygon are placed exactly on that horizontal reference plane.

Each of the at least two layers of liquid collection channels comprises in accordance with the present invention at least three, preferably at least five and more preferably at least seven liquid collection channels per meter of the longest length of each layer or, if the layer has in top view a circular form, per meter of the diameter of the layer.

In addition, in accordance with the present invention, seen in top view, at least 60% of the area of the liquid collector and gas distributor system is covered by the liquid collection channels. Top view means in this connection viewing from above onto the uppermost of the horizontal layers of liquid collection channels, i.e. in a direction being perpendicular to the top plane of the uppermost of the horizontal layers. In other words, it is the view along the vertical direction, when the liquid collector and gas distributor system is arranged so that the open ends of the liquid collection channels are arranged on the top side of the liquid collection channels. At least 60% of the area of the liquid collector and gas distributor system being - seen in top view - covered by the liquid collection channels means that the portion of the area of the liquid collector and gas distributor system seen in top view, which is covered by the liquid collection channels, is at least 60% of the total area of the liquid collector and gas distributor system seen in top view, wherein total area of the liquid collector and gas distributor system is the sum of the area being covered by the liquid collection channels and of the area defined by the gaps and being not covered by the liquid collection channels. The determination of the area covered by the liquid collection channels may be easily calculated based on the usually symmetrical and repeating structures after determining the dimensions of the relevant areas, projected on the horizontal plane, by a simple length measurement for instance by using 3d computer aided design, such as CAD software e.g. SolidWorks 2023. Alternatively, this may be determined for example by irradiating the whole area of the top side of the liquid collector and gas distributor system with light and by determining, how much percentage of the bottom area of the liquid collector and gas distributor system is irradiated by the light or determining the percentage of the shadow areas or projected areas, respectively, of the bottom area of the liquid collector and gas distributor system, respectively. The shadow areas represent the area covered by the liquid collection channels, while the irradiated area is the complementary area, both together summing up to the total area of the layer. Non-relevant shadow areas, such as those generated by optional further included ring channels or frame elements, must be deducted.

Moreover, in accordance with the present invention, seen in top view, the ratio of the portion of the area of a (preferably at least essentially horizontal) layer of liquid collection channels being covered by the liquid collection channels divided by the total area of the (preferably at least essentially horizontal) layer of liquid collection channels is different to the, seen in top view, ratio of the portion of the area of at least one other (preferably at least essentially horizontal) layer of liquid collection channels being covered by the liquid collection channels divided by the total area of the (preferably at least essentially horizontal) layer of liquid collection channels. Analogously to the top view of the liquid collector and gas distributor system, top view of a (preferably at least essentially horizontal) layer of liquid collection channels means viewing from above onto the respective (preferably at least essentially horizontal) layer of liquid collection channels, i.e. in a direction being perpendicular to the top plane of the respective (preferably at least essentially horizontal) layer. In other words, it is the view along the vertical direction, when the liquid collector and gas distributor system is arranged so that the open ends of the liquid collection channels are arranged on the top side of the liquid collection channels. A ratio of the portion of the area of a (first) (preferably at least essentially horizontal) layer being covered by the liquid collection channels divided by the total area of the (preferably at least essentially horizontal) layer being different to the respective ratio of another (second) (preferably at least essentially horizontal) layer of liquid collection channels means that, seen in top view, the ratio of the portion of the area of the liquid collector and gas distributor system, which is covered by the liquid collection channels, divided by the total area of the (first) (preferably at least essentially horizontal) layer is higher or lower than the respective ratio of the other (second) (preferably at least essentially horizontal) layer of liquid collection channels. This may be determined by irradiating the whole area of the top side of a first (preferably at least essentially horizontal) layer of liquid collection channels with light and by determining, how much percentage of the bottom area of the first (preferably at least essentially horizontal) layer of liquid collection channels is irradiated by the light or by determining the percentage of the shadow areas of the bottom area of the first (preferably at least essentially horizontal) layer of liquid collection channels, respectively, and then comparing the respective ratio with that obtained in the same manner by irradiating the whole area of the top side of a second (preferably at least essentially horizontal) layer of liquid collection channels with light and by determining, how much percentage of the bottom area of the second (preferably at least essentially horizontal) layer of liquid collection channels is irradiated by the light or by determining the percentage of the shadow areas of the bottom area of the second (preferably at least essentially horizontal) layer of liquid collection channels, respectively.

Good results are in particular obtained, when, seen in top view, at least 70%, more preferably at least 80%, even more preferably at least 90%, still more preferably at least 95%, still more preferably at least 98%, yet more preferably at least 99% and most preferably 100% of the area of the liquid collector and gas distributor system is covered by the liquid collection channels.

In a further development of the idea of the present invention, it is suggested that the liquid collector and gas distributor system comprises at least two and preferably three (preferably at least essentially horizontal) layers of liquid collection channels being arranged one above the other and each comprising at least three liquid collection channels being arranged adjacent to each other, but spaced apart thus forming a gap between each two adjacent liquid collection channels of a (preferably at least essentially horizontal) layer. Thereby, a complete collection of the descending liquid is facilitated, even if the gaps between adjacent liquid collection channels of one or more of the (preferably at least essentially horizontal) layers are comparable large in order to not disturb the ascending gas flow in an efficiency reducing extent. Preferably, the liquid collector and gas distributor system comprises two to five, more preferably two to four and most preferably two or three horizontal layers of liquid collection channels.

In accordance with a particular preferred embodiment of the present invention, seen in top view from the top to the bottom of the liquid collector and gas distributor system, for each (preferably at least essentially horizontal) layer of liquid collection channels being arranged above a lower (preferably at least essentially horizontal) layer of liquid collection channels the ratio of the portion of the area of the (preferably at least essentially horizontal) layer of liquid collection channels being covered by the liquid collection channels divided by the total area of the (preferably at least essentially horizontal) layer of liquid collection channels is lower than, seen in top view, the respective ratio of the (next) lower (preferably at least essentially horizontal) layer of liquid collection channels. Preferably, the ratio of the portion of the area of the horizontal layer being covered by the liquid collection channels divided by the total area of the horizontal layer of liquid collection channels is 10 to 80%, preferably 20 to 70% and preferably 30 to 60% lower than, seen in top view, the respective ratio of the (next) lower horizontal layer of liquid collection channels. Next lower (preferably at least essentially horizontal) layer of liquid collection channels means the adjacent lower (preferably at least essentially horizontal) layer of liquid collection channels, if two or more (preferably at least essentially horizontal) layers of liquid collection channels are arranged below the (preferably at least essentially horizontal) layer with the lower ratio. Moreover, it is preferred that the width of each liquid collection channel for each (preferably at least essentially horizontal) layer of liquid collection channels being arranged above a lower (preferably at least essentially horizontal) layer of liquid collection channels is smaller than the width of each liquid collection channel of the (next) lower (preferably at least essentially horizontal) layer of liquid collection channels.

The number of collection channels of each (preferably at least essentially horizontal) layer of liquid collection channels of the liquid collector and gas distributor system depends on the dimensions, in particular the longest distance of the liquid collector and gas distributor system measured essentially in a direction crossing the channels or, if the liquid collector and gas distributor system has a circular cross-sectional form, on the diameter of the liquid collector and gas distributor system, which in turn depends on the dimensions of the mass transfer column, in which the liquid collector and gas distributor system shall be used. In general, good results are obtained, when each (preferably at least essentially horizontal) layer of liquid collection channels comprises at least three, preferably at least five and more preferably at least seven liquid collection channels per meter of the longest length of each layer or, if the layer has in top view a circular form, per meter of the diameter of the layer, wherein the liquid collection channels are arranged adjacent to each other, but spaced apart thus forming a gap between each two adjacent liquid collection channels of a horizontal layer.

Also the form and dimensions of the collection channels of each horizontal layer of liquid collection channels of the liquid collector and gas distributor system depend on the dimensions of the mass transfer column, in which it shall be used. Good results are in particular obtained, when at least 50%, preferably at least 80%, more preferably at least 90%, still more preferably at least 95% and most preferably all of the collection channels have the form of a hollow box or trough, respectively, having two side walls and a bottom wall being connected with each other. The hollow boxes may or may not comprise two front walls. Preferably, all of these walls are fluid-tightly connected with each other, so that liquid cannot leave the bottom or the sides of the trough, with the exception that the bottom wall and/or one or both of the sidewalls of the troughs of the (preferably at least essentially horizontal) layers may comprise defined openings, in particular if a collection container is arranged below the (preferably at least essentially horizontal) layer so as to allow that liquid flows from the troughs of the (preferably at least essentially horizontal) layers downwardly into the collection container. The top surface being opposite to the bottom wall of each of the troughs may be partially opened, i.e. closed by a top wall comprising one or more openings for allowing liquid descending from above to enter into the troughs, or, more preferably, the top surface of each of the troughs is completely open. The present invention is not particularly limited concerning the cross-sectional form of the troughs or hollow boxes, respectively. For instance, the hollow boxes may have, independently from each other, a square, rectangular, trapezoidal, oval, polygonal or irregular cross-section. However, good results are in particular obtained, when at least some or all of the hollow boxes have a square cross-section or a rectangular cross-section. The term rectangular does not only mean sharp-edged rectangles, but also rectangles having round edges. Alternatively, some of or all hollow boxes may comprise, seen in the cross-section, an upper rectangular, such as square, portion, which is connected at its lower end with a lower u-shaped portion, with a lower v-shaped portion, with a lower trapezoidal shaped portion or with a lower combined v- and u-shaped portion. A lower combined v- and u-shaped portion may for instance be on one side of the cross-section be bordered by an inclined straight line so that this side of the cross-section is a half of a v-shape, whereas the other side of the of the cross-section is a rounded rectangle so that this side of the cross-section is a half of a u-shape.

Furthermore, it is preferred that at least 50%, preferably at least 80%, more preferably at least 90%, still more preferably at least 95% and most preferably all of the collection channels of a (preferably at least essentially horizontal) layer have the same cross-sectional form as well as the same cross-sectional dimensions and are arranged aligned and parallel to each other.

In turn, the cross-sectional form and cross-sectional dimensions of the liquid collection channels of different horizontal layers may be the same or different.

In a further development of the idea of the present invention, it is proposed that each of the liquid collection channels of a (preferably at least essentially) horizontal layer extends, seen in the top view of the (preferably at least essentially horizontal) layer, from one end to an opposite end of the liquid collector and gas distributor system. Accordingly, in the aforementioned embodiment, according to which the liquid collection channels are hollow boxes, the distance from one front end to the opposite front end of a hollow box corresponds to the distance from one end to the opposite end of the liquid collector and gas distributor system. However, in particular when the diameter of the liquid collector and gas distribution system is at least 600 mm, it may also be advantageous that the liquid collection channels of a (preferably at least essentially horizontal) layer do not extend, seen in the top view of the (preferably at least essentially horizontal) layer, from one end to an opposite end of the liquid collector and gas distributor system, but that it is interrupted at various locations. For instance, the liquid collection channels may be interrupted once, such as at a position essentially at the middle of the length of the respective liquid collection channel, for instance at a position in an area extending from 40 to 60% of the longitudinal axis of the liquid collection channel. Alternatively, the liquid collection channels may be interrupted twice or more, such as firstly at a position essentially at first third and secondly at a position essentially at second third of the length of the respective liquid collection channel, for instance firstly at a position in an area extending from 20 to 40% of the longitudinal axis of the liquid collection channel and secondly at a position in an area extending from 55 to 75% of the longitudinal axis of the liquid collection channel.

Concerning the material, from which the walls of the liquid collection channels are made, the present invention is not particularly restricted. Suitable materials are metals, metal alloys, non-metals, such as plastics, carbon fiber reinforced plastics, ceramics, glass, hard materials, concrete, rubber and stainless steel. The thickness of the walls of the liquid collection channels is preferably 0.2 to 6 mm, if the walls are made from a metal or a metal alloy, whereas the thickness of the walls of the liquid collection channels is preferably 0.5 to 10 mm, if the walls are made from a plastic or a carbon fiber reinforced plastic. Each liquid collection channel may be made from one piece being formed into the appropriate form, preferably of a trough, or from several walls, which are connected with each other by sticking together, by welding, by gluing or the like. All of these pieces may be produced by punching, drawing, rolling or bending processes. Preferably, all these pieces have a smooth surface, however, they may alternatively comprise a textured surface, for instance for stabilization or flow guidance of the liquid and gas.

The present invention is not particularly limited concerning the width of the gap between adjacent liquid collection channels of a (preferably at least essentially horizontal) layer. In tendency, the width of a gap between adjacent liquid collection channels is larger for the liquid collection channels of upper (preferably at least essentially horizontal) layers, whereas the width of a gap between adjacent liquid collection channels is smaller for the liquid collection channels of lower (preferably at least essentially horizontal) layers. Good results are in particular obtained, when the width of a gap, i.e. the distance between adjacent liquid collection channels of a (preferably at least essentially horizontal) layer, is 5 to 200 mm and preferably 20 to 100 mm. If the gap between adjacent liquid collection channels is not constant over the length of the adjacent liquid collection channels, the average width of a gap, i.e. the average distance between adjacent liquid collection channels of a (preferably at least essentially horizontal) layer, is 5 to 200 mm and preferably 20 to 100 mm. Average width of a gap means in this connection that the adjacent liquid collection channels are subdivided along their longitudinal direction into 1 mm sized sections, wherein the distance between the adjacent segments is measured, summed and divided by the number of segments.

In addition, it is preferred that at least 50%, preferably at least 80%, more preferably at least 90%, still more preferably at least 95% and most preferably all of the gaps of a (preferably at least essentially horizontal) layer have at least essentially the same cross-sectional form as well as at least essentially the same cross-sectional dimensions.

Also, the ratio of the portion of the area of a (preferably at least essentially horizontal) layer of liquid collection channels being covered by the liquid collection channels divided by the total area of the (preferably at least essentially horizontal) layer depends on the location of the horizontal layer. In tendency, the respective ratio is smaller for upper horizontal layers and higher for lower horizontal layers. Good results are in particular obtained, when the respective ratio of a horizontal layer is 10 to 70%.

Also, regarding the distance between adjacent (preferably at least essentially horizontal) layers of liquid collection channels, the present invention is not particularly restricted. Good results are in particular obtained, when the distance between adjacent (preferably at least essentially horizontal) layers of liquid collection channels in the vertical direction is 0 to 1000 mm, preferably 10 to 700 mm, more preferably 20 to 500 mm and most preferably 50 to 400 mm. The distance between adjacent (preferably at least essentially horizontal) layers of liquid collection channels means the vertical distance between the lowermost point of a (preferably at least essentially horizontal) layer and the uppermost point of an adjacent (preferably at least essentially horizontal) layer below.

In a further development of the idea of the present invention, it is suggested that the liquid collection channels of adjacent (preferably at least essentially horizontal) layers are arranged offset from one another, for instance so that the liquid collection channels of one (preferably at least essentially horizontal) layer are arranged vertically above or below a gap between adjacent liquid collection channels of an adjacent (preferably at least essentially) horizontal layer. More preferably, the central point of each liquid collection channel of one (preferably at least essentially horizontal) layer is arranged vertically above or below a position corresponding to 20 to 80%, preferably 30 to 70%, more preferably 40 to 60%, still more preferably 45 to 55% and most preferably about 50% of the width or average width, respectively, of a gap between adjacent liquid collection channels of an adjacent (preferably at least essentially horizontal) layer.

According to a particular preferred embodiment of the present invention, the liquid collector and gas distributor system comprises at least two and preferably at least three horizontal layers of liquid collection channels, wherein each collection channel and in particular those of the uppermost horizontal layer of the liquid collector and gas distributor system are hollow boxes or troughs, respectively, being open or at least partially open on their top sides, wherein, seen in top view from the top to the bottom of the liquid collector and gas distributor system, for each horizontal layer of liquid collection channels being arranged above a lower horizontal layer of liquid collection channels the ratio of the portion of the area of the horizontal layer of liquid collection channels being covered by the liquid collection channels divided by the total area of the horizontal layer of liquid collection channels is lower than, seen in top view, the respective ratio of the (next) lower horizontal layer of liquid collection channels, in particular when the liquid collector and gas distributor system is arranged so that the open ends of the liquid collection channels are arranged on the top side of the liquid collection channels. Moreover, it is preferred that, seen in the cross-section, the width of each liquid collection channel for each horizontal layer of liquid collection channels being arranged above a lower horizontal layer of liquid collection channels is smaller than the width of each liquid collection channel of the (next) lower horizontal layer of liquid collection channels. Thus, all liquid collection channels and already those of the uppermost horizontal layer collect during the operation descending liquid. This is further intensified when the gas counterflow increases because the descending liquid is forced into the wind shadow of the channels and then into them. For instance, this surprisingly allows to collect more than 60% of the descending liquid in the uppermost layer of liquid collection channels, even if the liquid collection channels only cover, seen in top view, about 30% of the area of the liquid collector and gas distributor system. It is particularly preferred in this embodiment, when all liquid collection channels of a horizontal row have the same cross-sectional form and the same cross-sectional dimensions and are arranged aligned and parallel to each other, wherein the liquid collection channels of adjacent horizontal layers are arranged offset from one another and preferably so that the liquid collection channels of one horizontal layer are arranged vertically above or below a gap between adjacent liquid collection channels of an adjacent horizontal layer. It is further preferred in this embodiment, when all gaps of a horizontal row have the same form and dimensions, wherein the gaps of adjacent horizontal layers are arranged offset from one another. Again, the form and dimensions of the liquid collection channels of different horizontal rows may be the same or different, and also the form and dimensions of the gaps of different horizontal rows may be the same or different.

In accordance with a first particular preferred embodiment of the present invention at least 50%, preferably at least 80%, more preferably at least 90%, still more preferably at least 95% and most preferably all of the collection channels of the uppermost (preferably at least essentially horizontal) layer of liquid collection channels are a hollow box with open top surface having the same cross-sectional form and the same cross-sectional dimensions and having, seen in the cross-sections of the liquid collection channels, a longest width of 6 to 80 mm and a height of 20 to 400 mm, preferably a longest width of 8 to 60 mm and a height of 50 to 300 mm and more preferably a longest width of 10 to 40 mm and a height of 75 to 200 mm. If the cross-section of a liquid collection channel has only one width, such as in the case of a rectangular, such as as square, cross-sectional form, the longest width is the width. However, if the width of the cross-section of a liquid collection channel varies over the height of the liquid collection channel, such as in the case of a trapezoidal cross-sectional form, the longest width is the width with the highest length or longest distance, respectively, which is in the case of a trapeze the width of the grand base. The height of the cross-section of a liquid collection channel is the longest vertical distance between a lowermost point and an uppermost point of the respective liquid collection channel. The bottom wall and/or one or both of the sidewalls of the hollow boxes may comprise defined openings, in particular if a collection container is arranged below the uppermost (preferably at least essentially horizontal) layer so as to allow that liquid flows from the troughs or liquid collection channels of the (preferably at least essentially horizontal) layer downwardly into the collection container. Again, the length of the liquid collection channel preferably extends, seen in the top view of the (preferably at least essentially horizontal) layer, from one end to an opposite end of the liquid collector and gas distributor system, but may be, in particular in the case of having a diameter of at least 600 mm, interrupted at various locations, such as the above mentioned locations. Preferably, the liquid collection channels have a cross-sectional form of a rectangle with a v-shaped bottom, i.e. of a rectangle without bottom wall, wherein the bottom portion of the rectangle is connected of which a v-shaped wall. Furthermore, it is preferred that at least 50%, preferably at least 80%, more preferably at least 90%, still more preferably at least 95% and most preferably all of the collection channels of the uppermost (preferably at least essentially horizontal) layer of liquid collection channels are arranged aligned and parallel to each other, wherein preferably the width or average width, respectively, of each gap between adjacent liquid collection channels is 20 to 200 mm and preferably 30 to 80 mm. Good results are in particular obtained, when the ratio of the portion of the area of the (preferably at least essentially horizontal) layer being covered by the liquid collection channels divided by the total area of the (preferably at least essentially horizontal) layer is 5 to 50% and preferably 10 to 40%, such as about 20 to 30%. Again, it is preferred that the liquid collection channels of the (preferably at least essentially horizontal) layer are arranged offset from those of the next lower (preferably at least essentially horizontal) layer another and preferably so that the liquid collection channels of the (preferably at least essentially horizontal) layer are arranged vertically above a gap between adjacent liquid collection channels of the next lower (preferably at least essentially horizontal layer).

In accordance with a second particular preferred embodiment of the present invention at least 50%, preferably at least 80%, more preferably at least 90%, still more preferably at least 95% and most preferably all of the collection channels of the lowermost (preferably at least essentially horizontal) layer of liquid collection channels are a hollow box with open top surface having the same cross-sectional form and the same cross-sectional dimensions and having, seen in the cross-sections of the liquid collection channels, a longest width of 12 to 300 mm and a height of 20 to 500 mm, preferably a longest width of 20 to 200 mm and a height of 30 to 200 mm and more preferably a longest width of 30 to 2000 mm and a height of 50 to 200 mm. The bottom wall and/or one or both of the sidewalls of the hollow boxes may comprise defined openings, in particular if a collection container is arranged below the lowermost (preferably at least essentially horizontal) layer so as to allow that liquid flows from the liquid collection channels or troughs of the (preferably at least essentially horizontal) layer downwardly into the collection container. Again, the length of the liquid collection channel preferably extends, seen in the top view of the (preferably at least essentially horizontal) layer, from one end to an opposite end of the liquid collector and gas distributor system, but may be, in particular in the case of having a diameter of at least 600 mm, interrupted at various locations, such as the above mentioned locations. Preferably, the liquid collection channels have a cross-sectional form of a rectangle. This form leads to an advantageous comparably high pressure loss at the lower end of the liquid collection channels of the lowermost (preferably at least essentially horizontal) layer, whereas the total pressure loss over the total height of all (preferably at least essentially horizontal) layers of the liquid collector and gas distributor system is comparably low. Furthermore, it is preferred that at least 50%, preferably at least 80%, more preferably at least 90%, still more preferably at least 95% and most preferably all of the collection channels of the lowermost (preferably at least essentially horizontal) layer of liquid collection channels are arranged aligned and parallel to each other, wherein preferably the width or average width, respectively, of each gap between adjacent liquid collection channels is 5 to 300 mm and preferably 10 to 150 mm. Good results are in particular obtained, when the ratio of the portion of the area of the (preferably at least essentially horizontal) layer being covered by the liquid collection channels divided by the total area of the (preferably at least essentially horizontal) layer is 30 to 80% and preferably 40 to 70%, such as about 55%. Again, it is preferred that the liquid collection channels of the (preferably at least essentially horizontal) layer are arranged offset from those of the next lower (preferably at least essentially horizontal) layer and preferably so that the liquid collection channels of the (preferably at least essentially horizontal) layer are arranged vertically above a gap between adjacent liquid collection channels of the next lower (preferably at least essentially horizontal) layer.

In accordance with a third particular preferred embodiment of the present invention the liquid collector and gas distributor system comprises an intermediate (preferably at least essentially horizontal) layer of liquid collection channels, which is arranged between the above described uppermost (preferably at least essentially horizontal) layer and the above described lowermost (preferably at least essentially horizontal) layer, wherein at least 50%, preferably at least 80%, more preferably at least 90%, still more preferably at least 95% and most preferably all of the collection channels of the lowermost (preferably at least essentially horizontal layer of liquid collection channels are a hollow box with open top surface having the same cross-sectional form and the same cross-sectional dimensions and having, seen in the cross-sections of the liquid collection channels, a longest width of 10 to 300 mm and a height of 20 to 500 mm, preferably a longest width of 20 to 80 mm and a height of 30 to 120 mm and more preferably a longest width of 20 to 60 mm and a height of 30 to 80 mm. The bottom wall and/or one or both of the sidewalls of the hollow boxes may comprise defined openings, in particular if a collection container is arranged below the lowermost (preferably at least essentially horizontal) layer so as to allow that liquid flows from the liquid collection channels or troughs of the (preferably at least essentially horizontal) layer downwardly into the collection container. Again, the length of the liquid collection channel preferably extends, seen in the top view of the (preferably at least essentially horizontal) layer, from one end to an opposite end of the liquid collector and gas distributor system. Preferably, the liquid collection channels have, seen in cross-section, a v-shaped form. Furthermore, it is preferred that at least 50%, preferably at least 80%, more preferably at least 90%, still more preferably at least 95% and most preferably all of the collection channels of the intermediate (preferably at least essentially horizontal) layer of liquid collection channels are arranged aligned and parallel to each other, wherein preferably the width or average width, respectively, of each gap between adjacent liquid collection channels is 10 to 200 mm and preferably 30 to 150 mm. Good results are in particular obtained, when the ratio of the portion of the area of the (preferably at least essentially horizontal) layer being covered by the liquid collection channels divided by the total area of the (preferably at least essentially horizontal) layer is 20 to 60% and preferably 30 to 50%, such as about 42%. Again, it is preferred that the liquid collection channels of the (preferably at least essentially horizontal) layer are arranged offset from those of the next lower (preferably at least essentially horizontal) layer another and preferably so that the liquid collection channels of the (preferably at least essentially horizontal) layer are arranged vertically above a gap between adjacent liquid collection channels of the next lower (preferably at least essentially horizontal layer).

In addition to the aforementioned liquid collection channels, the liquid collector and gas distributor system in accordance with the present invention may comprise additional channels, which may be provided for example for further collecting and/or mixing and/or redistributing the liquid and/or for positioning and/or supporting the liquid collection channels. Those optional additional channels may be located on top of the uppermost horizontal layer of liquid collection channels, may be located between adjacent horizontal layers of liquid collection channels or may be located below of the lowermost horizontal layer of liquid collection channels of the liquid collector and gas distributor system. In addition or alternatively to additional channels, the liquid collector and gas distributor system in accordance with the present invention may further comprise one or more supporting means or frames for positioning and/or supporting the liquid collection channels.

In a further development of the idea of the present invention, it is proposed that the liquid collector and gas distributor system comprises below any of the preferably at least essentially horizontal layers of liquid collection channels one or more collection containers for collecting the liquid. For instance, the liquid collector and gas distributor system may comprise one collection container in form of a trough having a rectangular cross-section being open on its top and being arranged with its length axis at least substantially perpendicular to the length axes of the liquid collection channels of the lowermost (preferably at least essentially horizontal) layer and extending below the midpoints of the length axes of the liquid collection channels of the lowermost (preferably at least essentially horizontal) layer. In order to distinguish between the liquid collection channels of the horizontal rows and the collection container, the collection container is named differently to the liquid collection channels, even if the collection channel may have the same trough-form as the liquid collection channels. In this embodiment, it is further preferred that each of the bottom walls of the liquid collection channels of the lowermost horizontal layer comprise in the portion being located above the collection container one or more openings so as to allow that liquid flows from the liquid collection channels of the lowermost horizontal layer downwardly into the collection container.

In accordance with a further preferred embodiment of the present invention adjacent layers of liquid collection channels are twisted with regard to each other. For instance, the liquid collector and gas distributor system may comprise three layer of liquid collection channels, whereas the length axes of the liquid collection channels of the uppermost and lowermost layers are parallel to each other, whereas the length axed of the liquid collection channels of the intermediate layer are twisted by 90° with regard to the length axes of the uppermost and lowermost layers.

In accordance with a further aspect, the present invention relates to a mass transfer column, in particular for distillation or absorption, wherein the mass transfer column includes at least one packing and at least one aforementioned liquid collector and gas distributor system.

The at least one packing is preferably at least one random packing bed or at least one structured packing bed and more preferably at least one structured packing bed. Furthermore, it is preferred that the mass transfer column comprises 1 to 20 and even more preferably 1 to 10 random packing beds or most preferred structured packing beds.

In a further development of the idea of the present invention, it is proposed that the mass transfer column includes one or more structured packing beds, each of which preferably comprising at least one and preferably at least two layers being stacked vertically above each other, wherein each of the layers comprises at least one and preferably a plurality of structured cross-channel packing elements. A structured cross-channel packing element is preferably a block, which comprises a plurality of sheets with periodic deformations, wherein the sheets are arranged in the longitudinal direction parallel and in touching contact with each other so that an open space extending from one end to the opposite end of the sheets is provided between them, wherein the open space is defined by the periodic deformations, and wherein adjacent sheets are oriented such that the periodic deformations of the adjacent sheets intersect in crisscross fashion with each other. Good results are in particular obtained, when the periodic deformations are corrugations comprising a plurality of alternately oriented peaks and valleys. The corrugations may have a square, a triangular, a sinusoidal or a meander-type cross-section, wherein corrugations having a sinusoidal cross-section a particularly preferred.

Preferably, the mass transfer column is embodied for the use as a distillation column or as an absorption column.

In accordance with a further particularly preferred embodiment of the present invention, it is proposed that a liquid collector and gas distributor system is arranged below the lowermost of the at least one packing bed.

In accordance with another preferred embodiment of the present invention, the mass transfer column comprises at least two packing beds, wherein a liquid collector and gas distributor system is arranged between adjacent packing beds.

Both aforementioned embodiments are preferably combined, i.e. the mass transfer column comprises at least two packing beds, wherein a liquid collector and gas distributor system is arranged between adjacent packing beds and a liquid collector and gas distributor system is arranged below the lowermost of the at least two packing beds.

The present invention is not particularly limited concerning the distance between the liquid collector and gas distributor system and the packing bed arranged above it. Good results are in particular obtained, when the distance between the liquid collector and gas distributor system and the packing bed arranged above it is 0 to 1,000 mm. The distance meant here is the axial distance, i.e. the distance along the length axis of the mass transfer column. More specifically, the aforementioned distance means the vertical distance between the lowermost point of a packing bed and the uppermost point of a liquid collector and gas distributor system being arranged below the packing bed. More preferably, the distance between the liquid collector and gas distributor system and the packing bed arranged above it is 0 to 700 mm, even more preferably 0 to 500 mm, still more preferably 0 to 400 mm and most preferably 0 to 200 mm. Particular good results are obtained, when the distance between the liquid collector and gas distributor system and the packing bed arranged above it is 0 mm, i.e. when the liquid collector and gas distributor system is arranged directly below and in touching contact with the packing bed. It has been surprisingly found within the present invention that thereby the ascending gas and the descending liquid may be separated directly, thereby preventing droplet entrainment and premature accumulation of liquid and a flooding. In the lower packing layer and in particular at the bottom edge of the packing bed, the liquid flows directly into the liquid collection channels. This is further intensified when the gas counterflow increases because the descending liquid flows in the packing into the wind shadow of the channels and then into the channels. For instance, this surprisingly allows to collect already about 90% of the descending liquid in the uppermost layer of liquid collection channels, even if the liquid collection channels only cover, seen in top view, about 30% of the area of the liquid collector and gas distributor system and no premature accumulation and flooding occurs.

In an alternative embodiment, if required, the mass transfer column comprises at least one support grid, with which the at least one liquid collector and gas distributor system is combined within the mass transfer column. The support grid either supports the packing bed above the liquid collector and gas distributor system or it supports the liquid collector and gas distributor system.

In accordance with still a further aspect, the present invention relates to a method for separating at least two fluids, wherein the method is performed with at least one aforementioned mass transfer column.

Preferably, the method comprises the separation of the at least two fluids by distillation or absorption.

Subsequently, the present invention is described by means of illustrating, but not limiting figures.

There is shown:

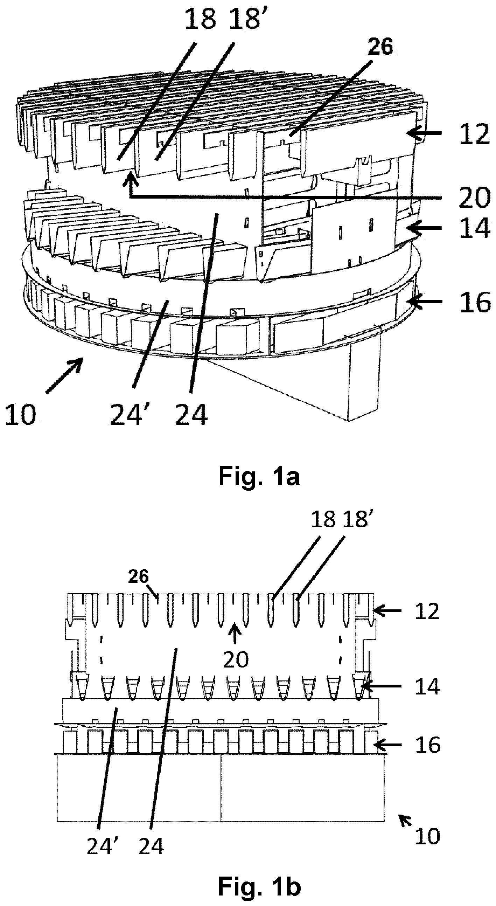

Fig. 1a      A schematic perspective view of a liquid collector and gas distributor system in accordance with one embodiment of the present invention.

Fig. 1 b      A cross-sectional view of the liquid collector and gas distributor system shown in figure 1a, seen from the side.

Fig. 1 c      A top view of the uppermost horizontal layer of liquid collection channels of the liquid collector and gas distributor system shown in figure 1a.

Fig. 1 d      A top view of the second horizontal layer of liquid collection channels of the liquid collector and gas distributor system shown in figure 1a.

Fig. 1 e    A top view of the lowermost horizontal layer of liquid collection channels of the liquid collector and gas distributor system shown in figure 1a.

Fig. 2    A schematic side view of a liquid collector and gas distributor system (lamella collector) in accordance with the prior art.

Fig. 3a    The velocity distribution at a vertical plane through the liquid collector and gas distributor systems of example 1 and of comparative example 1.

Fig. 3b    The number of theoretical stages versus the f-factor for a packing bed combined with the liquid collector and gas distributor systems of example 1 and of comparative example 1.

The liquid collector and gas distributor system 10 shown in figures 1a to 1e comprises three horizontal layers 12, 14, 16 of liquid collection channels 18, 18', wherein the three horizontal layers 12, 14, 16 of liquid collection channels 18, 18' are arranged one above the other and each horizontal layer 12, 14, 16 of liquid collection channels 18. More specifically, the liquid collector and gas distributor system 10 comprises an uppermost horizontal layer 12 of liquid collection channels 18, 18', a second horizontal layer 14 of liquid collection channels 18, 18' and a lowermost horizontal layer 16 of liquid collection channels 18, 18'. Each of the three horizontal layers 12, 14, 16 comprises a plurality of liquid collection channels 18, 18' being arranged adjacent to each other, but spaced apart thus forming a gap 20 between each two adjacent liquid collection channels 18, 18' of a horizontal layer 12, 14, 16. Each of the liquid collection channels 18, 18' of the three horizontal layers 12, 14, 16 has the form of a trough being open on its top, wherein the cross-sectional from of the liquid collection channels 18, 18' of the uppermost horizontal layer 12 is rectangular with a v-shaped bottom, the cross-sectional from of the liquid collection channels 18, 18' of the second horizontal layer 14 is v-shaped and the cross-sectional from of the liquid collection channels 18, 18' of the lowermost horizontal layer 16 is rectangular. Below the lowermost horizontal layer 16 of liquid collection channels 18, 18', a collection container 22 is arranged. The collection container 22 has the form of a trough having a rectangular cross-section being open on its top, is arranged with its length axis perpendicular to the length axes of the liquid collection channels 18, 18 of the lowermost horizontal layer 16 of the liquid collector and gas distributor system 10 and extends below the midpoints of the length axes of the liquid collection channels 18, 18' of the lowermost horizontal layer 16. In order to allow liquid to flow from the liquid collection channels 18, 18' of the lowermost horizontal layer 16 into the collection container 22, each of the bottom walls of the liquid collection channels 18, 18' of the lowermost horizontal layer 16 comprises openings (not shown) in the portion being located above the collection container 22. In addition, the liquid collector and gas distributor system 10 further comprises supporting means 24, 24' for supporting the liquid collection channels 18, 18' of the three horizontal layers 12, 14, 16 as well as drip sheets 26.

As shown in figure 1c, which is a top view of the uppermost horizontal layer 12 of liquid collection channels 18, 18' of the liquid collector and gas distributor system 10 shown in figure 1a, thus showing all of the three horizontal layers 12, 14, 16, seen in top view, more than 80% of the area of the liquid collector and gas distributor system 10 is covered by the liquid collection channels 18, 18'. As further shown in figure 1a, the widths of the gaps 20 between adjacent liquid collection channels 18, 18' of the uppermost horizontal layer 12 are larger than the widths of the gaps 20 between adjacent liquid collection channels 18, 18' of the second horizontal layer 14, wherein, in turn, the widths of the gaps 20 between adjacent liquid collection channels 18, 18' of the second horizontal layer 14 are larger than the widths of the gaps 20 between adjacent liquid collection channels 18, 18' of the lowermost horizontal layer 16. Consequently, the ratio of the portion of the area of the uppermost horizontal layer 12 of liquid collection channels 18, 18' being covered by the liquid collection channels 18, 18' divided by the total area of the uppermost horizontal layer 12 is lower than the respective ratio of the second horizontal layer 14, and the ratio of the portion of the area of the second horizontal layer 14 of liquid collection channels 18, 18' being covered by the liquid collection channels 18, 18' divided by the total area of the second horizontal layer 14 is lower than the respective ratio of the lowermost horizontal layer 16.

Subsequently, the present invention is described by means of an illustrating, but not limiting example.

Example 1 and comparative example 1

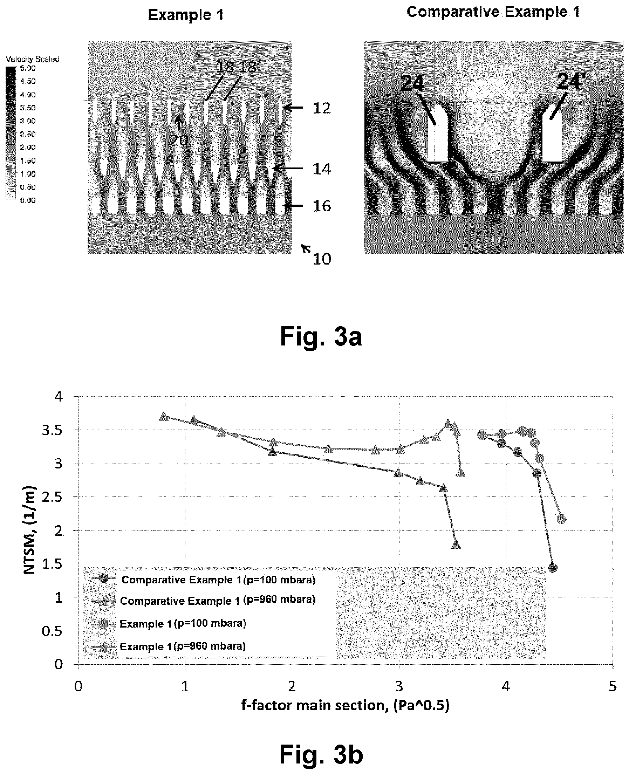

The liquid collector and gas distributor system 10 shown in figures 1a to 1e (example 1) and a lamella collector (prior art) shown in figure 2 (comparative example 1) were tested in a distillation column. The results are shown in figures 3a and 3b. The commonly known standard procedure determines the pressure drop over the packing bed and the mass transfer efficiency using a binary mixture under total reflux condition. The binary standard test mixture used in the present invention, is monochlorobenzene (as low-boiler) and ethylbenzene (as high-boiler). This and other standard close-boiling ideal binary mixtures to assess the performance of distillation equipment are specified in U. Onken, W. Arlt: "Recommended Test Mixtures for Distillation Columns", 2nd Ed. 1990, The Institution of Chemical Engineers, Rugby, England. ISBN 0-85295-248-1.

The bottom of a distillation column was filled with a sufficient amount of the binary mixture to maintain a decent liquid level during operation of the column. The reboiler was started, a part of the liquid mixture was continuously vaporized, and the vapor rose towards the head of the column. The flow rate of the vapor can be expressed in terms of the f-factor and is commonly determined indirectly via the energy balance at the reboiler or at the condenser at the column head. The condenser cooled the vapor such that it condensed back to liquid. Under the preferred total reflux conditions, the entire amount of liquid was sent back to the top of the packing bed, where it was distributed by means of a distributor. The distributor is typically a device comprising channels that receive the liquid and provide an evenly spaced set of orifices through which the liquid can trickle down onto the top packing of the structured packing bed. After trickling through the structured packing bed, the entire amount of liquid was collected at the bottom of the structured packing bed by means of a collector (the liquid collector and gas distributor system or the lamella collector of prior art) from where it was sent back to the bottom of the column. At the bottom the liquid joined the liquid pool from which it was vaporized again. A constant head pressure p was established by controlling the cooling duty of the condenser in combination with a vacuum pump to remove surplus inert gases.

After a certain time of operation at constant reboiler duty a steady state condition was achieved. At this point, the pressure drop over the packing bed and temperatures at relevant points along the column were read, and top and bottom samples of the mixture were taken from the distributor at the top of the packing bed and from the collector at the lower end of the packing bed or from the sump. Several operating points were measured by varying the heat (and cooling) duty, which affects the f-factor (vapor flow) and the related liquid flow through the packing bed while the head pressure was kept unchanged. The same experiment was repeated for several settings of the head pressure.

The compositions of the samples were analyzed by means of a calibrated gas chromatograph. The top and bottom samples varied by the amount of low-boiler they contain. More low-boiler, i.e. the compound with the lower boiling temperature, was found in the top sample than in the bottom sample. Once the binary compositions were known, the equation according to Fenske (M. R. Fenske, Ind. Engng. Chem. 24, p. 482, 1932) was applied to determine the number of Theoretical Stages per Meter (NTSM). Sometimes, the inverse value HETP is used, which is called Height Equivalent to a Theoretical Plate.

HETP = 1 / NTSM

A high NTSM (or a low HETP) means a good mass transfer efficiency.

The f-factor is defined by:

$$\text{f-factor} = v_G \cdot \sqrt{\rho_G}$$

wherein $v_G$ is the average velocity of the rising vapor, which can be determined from the mass flow rate via an energy balance at the reboiler. The second variable $\rho_G$ is the vapor density at the relevant vapor/liquid equilibrium. Due to the change in pressure and temperature along the column the vapor density and other physical properties of the fluids varied along the column, but the relevant information is available for the binary mixture. Such variations require to select an appropriate definition of the f-factor. It may be determined by means of the properties valid under the conditions at the top or at the bottom of the packing bed. Alternatively, an average value may be computed taking into account the variation over the entire bed. For comparison purpose any of the possible approaches works, provided the same approach is used for all tests.

A high f-factor means a high mass flow rate in the column. The value of the f-factor that is achievable is usually limited by the flooding which determines the capacity of packing and internals. Sometimes the capacity factor c is used instead of the f-factor, which is obtained by dividing the f-factor by the square root of the density difference of the liquid and the vapor.

The pressure drop over the packing bed and internals was another relevant result of the experiment. It was obtained as the difference of the pressure readings at the top above the distributor and at the bottom below the collectors after dividing by the bed height $H_B$:

$$\Delta P / \Delta z = ( p_{top} - p_{bottom} ) / H_B$$

Except for the replacement of the liquid collector and gas distributor system by a lamella collector system, the packing and internals in the column were identical. In both cases, the same state of the art curl tube distributor and the same high performance cross channel packing were used.

The liquid collector and gas distributor system and the reference lamella collector system were tested in a distillation column with 1 m inner diameter at total reflux using monochlorobenzene and ethylbenzene at head pressures of p=960 mbar (close to atmospheric) and p=100 mbar. The packing beds were 4.7 m high. The obtained efficiency curves are shown in Figure 3b. In both cases, the liquid collector and gas distributor system according to the invention showed in comparison to the reference lamella collector system a higher mass transfer efficiency (higher NTSM) towards the capacity limit, which is characterized by the f-factor, where the efficiency suddenly plummets. It is remarkable and surprising that the liquid collector and gas distributor system significantly improves the mass transfer results.

Furthermore the pressure drops measured over the entire bed and the internals were also reduced in the liquid collector and gas distributor system set-up compared to the reference lamella collector system set-up, whereby the more meaningful results are shown in a direct CFD comparison of the pressure drops just determined over the height of the he liquid collector and gas distributor system compared to the reference lamella collector system.

For both cases identical sump conditions as described in the measurement above were used. Furthermore the Computational Fluid Dynamics (CFD) Simulation Software Ansys Fluids 2020 R2 were used. In the example shown in Figure 3a, the f-factor is 5, the gas density is 0.38 kg/m3 and the gas viscosity is 0.00000076 Pa s. The column diameter is 1 m and the packed bed above was modelled via a resistance model.

In Table 1 the most important quantitative results are summarized and Figure 3a shows the gas velocity distribution across the liquid collector and gas distributor system compared to the reference lamella collector.

Table 1

|  | Lamella collector system (prior art) | Liquid collector and gas distributor system |
|---|---|---|
| Minimal vertical velocity at packing entry [m/s] | -9.4 | -0.0 |
| Maximal vertical velocity at packing entry [m/s] | 37.5 | 20.0 |
| Fraction "Area with Velocity > 2*Average" | 29.3% | -1% |
| Pressure loss | 450 Pa | 94 Pa |

The liquid collector and gas distributor system is capable of almost completely eliminating the negative gas velocities at the packing inlet, under the conditions described, which were previously as high as -9.4 m/s, and the maximum gas velocities at the packing inlet have also been reduced from 37.5 to 20.0 m/s compared to the reference lamella collector. In addition, the area fraction where the gas velocities are more than twice the average velocity was reduced from 29.3 to 1%. This harmonization of the gas flow contributes to the increased NTSM values towards the capacity limit with increasing f-Factor, shown in Figure 3b, and in addition the pressure loss can also be reduced from 450 Pa to 94 Pa under the described conditions. In this case the pressure loss was directly determined by means of CFD by computing the difference between the average pressure at the column cross section above and below the devices of example 1 and the comparative example 1.

**Reference Numeral List**

| 10 | Liquid collector and gas distributor system |
|---|---|
| 12 | Uppermost horizontal layer of liquid collection channels |
| 14 | Second horizontal layer of liquid collection channels |
| 16 | Lowermost horizontal layer of liquid collection channels |
| 18, 18' | Liquid collection channel |
| 20 | Gap between adjacent liquid collection channels |
| 22 | Collection container |
| 24, 24' | Supporting means / supporting grid |
| 26 | Drip sheet |

**Claims**

1. A liquid collector and gas distributor system for a separation device, such as for a mass transfer column, in particular for a packing column for distillation or absorption, wherein the liquid collector and gas distributor system comprises at least two layers of liquid collection channels, wherein the at least two layers of liquid collection channels are arranged one above the other and each layer of liquid collection channels comprises at least three liquid collection channels being arranged adjacent to each other, but spaced apart thus forming a gap between each two adjacent liquid collection channels of a layer, wherein, seen in top view, at least 60% of the area of the liquid collector and gas distributor system is covered by the liquid collection channels, and wherein, seen in top view, the ratio of the portion of the area of a layer of liquid collection channels being covered by the liquid collection channels divided by the total area of the layer of liquid collection channels is different to the, seen in top view, ratio of the portion of the area of at least one other layer of liquid collection channels being covered by the liquid collection channels divided by the total area of the layer of liquid collection channels.

2. The liquid collector and gas distributor system in accordance with claim 1, wherein at least one and preferably each of the at least two layers of liquid collection channels is/are arranged at least essentially horizontal, wherein at least essentially horizontal means that the plurality of liquid collection channels of the essentially horizontal layer are arranged adjacent to, but spaced apart from each other, wherein for at least 50%, preferably for at least 80%, more preferably for at least 90%, still more preferably for at least 95% and most preferably for each of the liquid collection channels of one essentially horizontal layer a polygon connecting the center points inside a liquid collection channel, wherein the center points are positioned on a sequence of cross-sections through the liquid collection channel placed between one end and the opposite end of the liquid collection channel, has maximal deviation from a horizontal plane of at most 30°, preferably at most 20°, more preferably at most 10°, still more preferably at most 5°, yet more preferably 2° and most preferably 0°.

3. The liquid collector and gas distributor system in accordance with claim 1 or 2, wherein, seen in top view, at least 70%, more preferably at least 80%, even more preferably at least 90%, still more preferably at least 95%, still more preferably at least 98%, yet more preferably at least 99% and most preferably 100% of the area of the liquid collector and gas distributor system are covered by the liquid collection channels.

4. The liquid collector and gas distributor system in accordance with any of the preceding claims, wherein, seen in top view from the top to the bottom of the liquid collector and gas distributor system, for each, preferably at least essentially horizontal layer of liquid collection channels being arranged above a lower, preferably at least essentially horizontal layer of liquid collection channels the ratio of the portion of the area of the, preferably at least essentially horizontal layer of liquid collection channels being covered by the liquid collection channels divided by the total area of the, preferably at least essentially horizontal layer of liquid collection channels is lower than, seen in top view, the respective ratio of the lower, preferably at least essentially horizontal layer of liquid collection channels.

5. The liquid collector and gas distributor system in accordance with any of the preceding claims, wherein at least 50%, preferably at least 80%, more preferably at least 90%, still more preferably at least 95% and most preferably all of the collection channels have the form of a hollow box having two side walls and a bottom wall being fluid-tightly connected with each other, wherein the top surface being opposite to the bottom wall of the hollow box is partially opened or preferably completely open, wherein at least 50%, preferably at least 80%, more preferably at least 90%, still more preferably at least 95% and most preferably all of the collection channels of a, preferably at least essentially horizontal layer have the same cross-sectional form as well as the same cross-sectional dimensions, are arranged aligned and parallel to each other and comprise one or more openings, which are provided in a bottom wall and/or in a sidewall of the collection channels.

6. The liquid collector and gas distributor system in accordance with any of the preceding claims, wherein the distance between adjacent, preferably at least essentially horizontal layers of liquid collection channels in the vertical direction is 0 to 1,000 mm, preferably 10 to 700 mm, more preferably 20 to 500 mm and most preferably 50 to 400 mm, and, wherein preferably the liquid collection channels of adjacent, preferably at least essentially horizontal layers are arranged offset from one another and preferably so that the liquid collection channels of one, preferably at least essentially horizontal layer are arranged vertically above or below a gap between adjacent liquid collection channels of an adjacent, preferably at least essentially horizontal layer.

7. The liquid collector and gas distributor system in accordance with any of the preceding claims, which comprises at least two and preferably at least three preferably at least essentially horizontal layers of liquid collection channels, wherein each collection channel is a hollow box being open or at least partially open on its top side, wherein, seen in top view from the top to the bottom of the liquid collector and gas distributor system, for each horizontal layer of liquid collection channels being arranged above a lower horizontal layer of liquid collection channels the ratio of the portion of the area of the horizontal layer of liquid collection channels being covered by the liquid collection channels divided by the total area of the horizontal layer of liquid collection channels is lower than, seen in top view, the respective ratio of the next lower horizontal layer of liquid collection channels.

8. The liquid collector and gas distributor system in accordance with any of the preceding claims, wherein at least 50%, preferably at least 80%, more preferably at least 90%, still more preferably at least 95% and most preferably all of the collection channels of the uppermost, preferably at least essentially horizontal layer of liquid collection channels are a hollow box with open top surface having the same cross-sectional form and the same cross-sectional dimensions and having, seen in the cross-sections of the liquid collection channels, a longest width of 6 to 80 mm and a height of 20 to 400 mm, preferably a longest width of 8 to 60 mm and a height of 50 to 300 mm and more preferably a longest width of 10 to 40 mm and a height of 75 to 200 mm, wherein at least 50%, preferably at least 80%, more preferably at least 90%, still more preferably at least 95% and most preferably all of the collection channels of the uppermost, preferably at least essentially horizontal layer of liquid collection channels are arranged aligned and parallel to each other, and wherein the area of the, preferably at least essentially horizontal layer being covered by the liquid collection channels divided by the total area of the, preferably at least essentially horizontal layer is 5 to 50% and preferably 10 to 40%.

9. The liquid collector and gas distributor system in accordance with any of the preceding claims, wherein at least 50%, preferably at least 80%, more preferably at least 90%, still more preferably at least 95% and most preferably all of the collection channels of the lowermost, preferably at least essentially horizontal layer of liquid collection channels are a hollow box with open top surface having the same cross-sectional form and the same cross-sectional dimensions and having, seen in the cross-sections of the liquid collection channels, a longest width of 10 to 300 mm and a height of 20 to 500 mm, preferably a longest width of 20 to 200 mm and a height of 30 to 200 mm and more preferably a longest width of 30 to 100 mm and a height of 50 to 200 mm, wherein at least 50%, preferably at least 80%, more preferably at least 90%, still more preferably at least 95% and most preferably all of the collection channels of the, preferably at least essentially lowermost horizontal layer of liquid collection channels are arranged aligned and parallel to each other, and wherein the ratio of the portion of the area of the horizontal, preferably at least essentially layer being covered by the liquid collection channels divided by the total area of the, preferably at least essentially horizontal layer is 30 to 80% and preferably 40 to 70%.

10. The liquid collector and gas distributor system in accordance with any of the preceding claims, wherein at least 50%, preferably at least 80%, more preferably at least 90%, still more preferably at least 95% and most preferably all of the collection channels of the intermediate, preferably at least essentially horizontal layer of liquid collection channels, which is arranged between an uppermost preferably at least essentially horizontal layer and a lowermost preferably at least essentially horizontal layer, are a hollow box with open top surface having the same cross-sectional form and the same cross-sectional dimensions and having, seen in the cross-sections of the liquid collection channels, a longest width of 10 to 300 mm and a height of 20 to 500 mm, preferably a longest width of 20 to 80 mm and a height of 30 to 120 mm and more preferably a longest width of 20 to 60 mm and a height of 30 to 80 mm, wherein at least 50%, preferably at least 80%, more preferably at least 90%, still more preferably at least 95% and most preferably all of the collection channels of the uppermost or of an intermediate, preferably at least essentially horizontal layer of liquid collection channels are arranged aligned and parallel to each other, and wherein the ratio of the portion of the area of the, preferably at least essentially horizontal layer being covered by the liquid collection channels divided by the total area of the, preferably at least essentially horizontal layer is 20 to 60% and preferably 25 to 45%.

11. A mass transfer column, in particular for distillation or absorption, wherein the mass transfer column includes at least one structured packing bed and at least one liquid collector and gas distributor system in accordance with any one of the preceding claims.

12. The mass transfer column in accordance with claim 11, which includes two or more structured packing beds, each of which preferably comprising at least one and preferably at least two layers being stacked vertically above each other, wherein each of the layers comprises at least one and preferably a plurality of structured cross-channel packing elements, wherein a liquid collector and gas distributor system is arranged below the lowermost of the at least one structured packing bed.

13. The mass transfer column in accordance with claim 12, which comprises at least two structured packing beds, wherein a liquid collector and gas distributor system is arranged between adjacent packing beds.

14. The mass transfer column in accordance with any of claims 11 to 13, wherein the distance between the liquid collector and gas distributor system and the packing arranged above it is 0 to 1,000 mm, preferably 0 to 700, more preferably 0 to 500 mm, still more preferably 0 to 400 and most preferably 0 to 200 mm.

15. A method for separating at least two fluids, preferably for performing a distillation or an absorption, wherein the method is performed with at least one mass transfer column in accordance with any of claims 11 to 14.

18  18'

26

12

20

14

16

10    24'  24

**Fig. 1a**

18 18'

26

12

20

14

16

24'  24

10

**Fig. 1b**

**Fig. 1c**      **Fig. 1d**      **Fig. 1e**

**Fig. 2**

Example 1

Comparative Example 1

**Fig. 3a**

**Fig. 3b**

Europäisches
Patentamt

European
Patent Office

Office européen
des brevets

# EUROPEAN SEARCH REPORT

**Application Number**

EP 24 16 8140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/306720 A1 (SANDFORD NEIL [US]) 1 October 2020 (2020-10-01) * paragraphs [0015] - [0032]; figures 4-5 * | 1-3,5-15 | INV. B01D3/00 B01D3/20 F25J3/04 B01D53/18 |
| X | US 2022/370973 A1 (HIRSCHBERG SEBASTIAN [CH]) 24 November 2022 (2022-11-24) * paragraphs [0104] - [0114]; figure 8 * | 1-15 | |
| X | US 9 004 460 B2 (BROWN STEVEN C [US]; RICOTTA JOHN P [US] ET AL.) 14 April 2015 (2015-04-14) * column 5, line 20 - column 8, line 62 * | 1-3,5-15 | |

**TECHNICAL FIELDS SEARCHED (IPC)**

B01D

The present search report has been drawn up for all claims

| Place of search | Date of completion of the search | Examiner |
|---|---|---|
| The Hague | 5 September 2024 | Thibault, Valerie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8140

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | Publication date | Patent family member(s) | | Publication date |
|---|---|---|---|---|
| US 2020306720 A1 | 01-10-2020 | TW | 202039044 A | 01-11-2020 |
| | | US | 2020306720 A1 | 01-10-2020 |
| | | WO | 2020194123 A1 | 01-10-2020 |
| US 2022370973 A1 | 24-11-2022 | BR | 112022008707 A2 | 19-07-2022 |
| | | CN | 114786789 A | 22-07-2022 |
| | | EP | 3819014 A1 | 12-05-2021 |
| | | EP | 4021603 A1 | 06-07-2022 |
| | | JP | 2023501783 A | 19-01-2023 |
| | | KR | 20220091587 A | 30-06-2022 |
| | | TW | 202118551 A | 16-05-2021 |
| | | US | 2022370973 A1 | 24-11-2022 |
| | | WO | 2021089273 A1 | 14-05-2021 |
| US 9004460 B2 | 14-04-2015 | CN | 105324162 A | 10-02-2016 |
| | | EP | 3010614 A1 | 27-04-2016 |
| | | ES | 2647537 T3 | 22-12-2017 |
| | | US | 2014374927 A1 | 25-12-2014 |
| | | US | 2015174505 A1 | 25-06-2015 |
| | | WO | 2014204552 A1 | 24-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **U. ONKEN** ; **W. ARLT**. Recommended Test Mixtures for Distillation Columns. The Institution of Chemical Engineers

- **M. R. FENSKE**. *Ind. Engng. Chem.*, 1932, vol. 24, 482